# EUROPÄISCHE PATENTSCHRIFT

(11) **EP 3 803 104 B1**
(45) Veröffentlichungstag und Bekanntmachung des Hinweises auf die Patenterteilung: **16.07.2025**
(21) Anmeldenummer: 19726660.4
(22) Anmeldetag: 23.05.2019
(51) Int. Cl.: F03D 1/06

(54) **WINDENERGIEANLAGEN-ROTORBLATT**
WIND POWER PLANT ROTOR BLADE
PALE DE ROTOR D'ÉOLIENNE

(30) Priorität: 29.05.2018 DE 102018112833
(43) Veröffentlichungstag der Anmeldung: 14.04.2021
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2019/063368
(87) Internationale Veröffentlichungsnummer: WO 2019/228906

(56) Entgegenhaltungen:
- WO-A1-2016/189092
- DE-A1- 102011 088 025
- DE-A1- 102014 206 670
- JP-A- 2004 011 616
- US-A1- 2010 122 442

## Beschreibung

Die vorliegende Erfindung betrifft ein Windenergieanlagen-Rotorblatt sowie eine Windenergieanlage.

Aufgrund der zunehmenden Größe der modernen Windenergieanlagen wurden auch die Rotorblätter der Windenergieanlage immer länger, was teilweise zu erheblichen Transportproblemen führt. Zur Reduzierung der Transportprobleme werden die Rotorblätter zunehmend entlang ihrer Längsachse geteilt ausgeführt und geteilt zur Baustelle transportiert und dort erst zusammengesetzt. Derartige geteilte Rotorblätter weisen jedoch den Nachteil auf, dass sie ein größeres Gewicht aufweisen und kostenintensiver sind als nicht geteilte Rotorblätter.

In der prioritätsbegründenden deutschen Patentanmeldung hat das Deutsche Patent- und Markenamt die folgenden Dokumente recherchiert: DE 10 2010 046 519 A1, DE 10 2011 088 025 A1, DE 10 2014 206 670 A1, DE 10 2014 220 249 A1 und EP 2 815 861 A1. Weiterer Stand der Technik ist in US2010/122442A1 und WO2016/189092A1 offenbart.

Es ist eine Aufgabe der vorliegenden Erfindung, die obigen Nachteile zu beheben oder zumindest zu reduzieren. Es ist insbesondere eine Aufgabe der vorliegenden Erfindung, ein Windenergieanlagen-Rotorblatt vorzusehen, welches eine verbesserte Transportierbarkeit bei Bedarf ermöglicht.

Diese Aufgabe wird durch ein Verfahren zum Montieren eines Windenergieanlagen-Rotorblatt nach Anspruch 1 gelöst.

Somit wird ein Windenergieanlagen-Rotorblatt mit einem Rotorblattwurzelbereich, einem Rotorblattspitzenbereich, einer Rotorblattvorderkante, einer Rotorblatthinterkante, einer Rotorblattlängsachse, einem Rotorblattinnenabschnitt, einem Rotorblattaußenabschnitt sowie einer Teilungsebene zwischen dem Rotorblattaußenabschnitt und dem Rotorblattinnenabschnitt vorgesehen. Das Rotorblatt ist entlang der Teilungsebene teilbar. Das Rotorblatt weist ferner jeweils einen Verstärkungsbereich in dem Rotorblattinnenabschnitt und dem Rotorblattaußenabschnitt auf, welche jeweils benachbart zu der Teilungsebene angeordnet sind. Das Rotorblatt wird durch Trennung entlang der Teilungsebene mehrteilig ausgestaltet. Der Verstärkungsbereich an dem Rotorblattinnenabschnitt kann nach der Trennung des Rotorblattes entlang der Teilungsebene an dem Verstärkungsbereich des Rotorblattaußenabschnitts befestigt werden.

Gemäß einem Aspekt der vorliegenden Erfindung weist das Windenergieanlagen-Rotorblatt einen ersten Hauptgurt in dem Rotorblattinnenabschnitt und einen zweiten Hauptgurt in dem Rotorblattaußenabschnitt auf.

Gemäß einem weiteren Aspekt der vorliegenden Erfindung sind der erste und zweite Hauptgurt an ihren Enden geschäftet ausgestaltet.

Gemäß einem weiteren Aspekt der vorliegenden Erfindung weist das Rotorblatt einen ersten Steg im Bereich des ersten Hauptgurtes und einen zweiten Steg im Bereich des zweiten Hauptgurtes auf. Der erste und zweite Steg enden vor der Teilungsebene.

Gemäß einem weiteren Aspekt der vorliegenden Erfindung weist das Rotorblatt eine Hinterkantenverstärkung und einen Hinterkantensteg sowohl in dem Rotorblattinnenabschnitt als auch in dem Rotorblattaußenabschnitt auf.

Gemäß einem weiteren Aspekt der vorliegenden Erfindung weisen die Verstärkungsbereiche in dem Rotorblattinnenabschnitt und dem Rotorblattaußenabschnitt eine Mehrzahl von Durchgangslöchern oder Durchgangsbohrungen auf.

Außerdem erfolgt das Verfahren zum Montieren eines Windenergieanlagen-Rotorblattes an einer Gondel einer Windenergieanlage durch Überprüfung von Logistikeinschränkungen zu dem Aufstellort der Windenergieanlage. Basierend auf den Logistikeinschränkungen wird ein einteiliges oder mehrteiliges Rotorblatt ausgewählt. Ein einteiliges Rotorblatt wird in einer Hauptform hergestellt. Alternativ dazu wird ein mehrteiliges Rotorblatt in der Hauptform basierend auf den Logistikeinschränkungen hergestellt. Das einteilig hergestellte Windenergieanlagen-Rotorblatt wird entlang der Teilungsebene getrennt, um einen Rotorblattinnenabschnitt und einen Rotorblattaußenabschnitt zu erhalten. Der Rotorblattinnenabschnitt und der Rotorblattaußenabschnitt werden getrennt voneinander zum Aufstellort transportiert. Der Rotorblattinnenabschnitt und der Rotorblattaußenabschnitt werden an dem Aufstellort zusammengefügt. Das zusammengebaute Rotorblatt wird an der Gondel der Windenergieanlage montiert.

Je nach Lage des Aufstellortes einer Windenergieanlage kann es vorkommen, dass ein einteiliges Rotorblatt nicht ohne Weiteres zum Aufstellort transportiert werden kann. Dies kann beispielsweise darin begründet sein, dass die Zuwegung zu dem Aufstellort es nicht zulässt, dass ein sehr langes Rotorblatt transportiert wird. Ferner kann es dazu kommen, dass die Kosten für den Transport der Rotorblätter zu dem Aufstellort extrem hoch sind, weil beispielsweise Bäume gefällt werden müssen oder eine spezielle Zuwegung vorgesehen sein muss. In derartigen Fällen wäre es sinnvoll, das Rotorblatt nicht einteilig zum Aufstellort zu transportieren, sondern das Rotorblatt mehrteilig auszugestalten. Eine mehrteilige Ausgestaltung eines Rotorblattes bedarf jedoch typischerweise das Vorsehen einer alternativen Hauptform, da typischerweise die jeweiligen Teile des Rotorblattes separat hergestellt werden. Das Vorsehen von alternativen Hauptformen ist jedoch sehr kostenintensiv.

Daher wird erfindungsgemäß vorgeschlagen, lediglich eine Hauptform zu verwenden und dann in Abhängigkeit des Aufstellortes zu entscheiden, ob die Rotorblätter einteilig oder mehrteilig ausgestaltet sein müssen. Falls sie einteilig ausgestaltet sein können, muss nichts an der Fertigung des Rotorblattes geändert werden. Falls sie jedoch mehrteilig (beispielsweise zweiteilig) ausgestaltet sein sollen, dann kann die jeweilige Hauptform verwendet werden, zusätzlich dazu müssen jedoch Vorkehrungen getroffen werden, damit das Rotorblatt dann entlang einer Teilungsebene getrennt, beispielsweise aufgesägt wird, und anschließend an der Baustelle wieder zusammengefügt werden kann. Dazu wird erfindungsgemäß ein Verstärkungsbereich in dem Rotorblattinnenabschnitt und in dem Rotorblattaußenabschnitt vorgesehen, wobei die jeweiligen Verstärkungsbereiche benachbart zu der Teilungsebene sind, entlang welcher das zunächst einteilig hergestellte Rotorblatt dann getrennt bzw. zersägt wird.

Dadurch kann erfindungsgemäß erreicht werden, dass die Herstellung eines mehrteiligen Rotorblattes erheblich kostengünstiger erreicht werden kann.

Die Erfindung betrifft den Gedanken, ein Windenergieanlagen-Rotorblatt vorzusehen, welches sowohl als einteiliges Rotorblatt als auch als mehrteiliges Rotorblatt verwendet werden kann. Insbesondere sollen die gleichen Bauteilformen für beide Varianten verwendet werden. Falls ein mehrteiliges Rotorblatt benötigt wird, dann kann dieses durch Durchtrennen des einteilig hergestellten Rotorblattes erreicht werden. Das erfindungsgemäße Windenergieanlagen-Rotorblatt weist im Bereich der möglichen Teilungsebene Strukturverstärkungen auf.

Typischerweise wird das Rotorblatt in zwei Hälften bzw. Halbschalen produziert und die Halbschalen werden dann zusammengeklebt. Das Windenergieanlagen-Rotorblatt weist im Bereich der möglichen Teilungsebene Strukturverstärkungen insbesondere mit Durchgangslöchern oder Bohrungen an jedem Teil des Rotorblattes auf, so dass die beiden Rotorblattteile (Rotorblattinnenteil, Rotorblattaußenteil) auf der Baustelle aneinander befestigt werden können.

Vorzugsweise liegt die Teilungsebene in demjenigen Bereich des Rotorblattes, der für Servicemitarbeiter zugänglich ist, so dass die Verbindung zwischen den beiden Teilen des Rotorblattes überprüft werden kann.

Gemäß der Erfindung kann eine Hauptform sowohl für ein einteiliges als auch für ein später mehrteilig ausgeführtes Rotorblatt verwendet werden. Die äußere Form des einteiligen Rotorblattes sowie des mehrteiligen Rotorblattes sind damit gleich. Falls ein mehrteiliges Rotorblatt gebaut werden soll, dann wird die Hauptform verwendet, um die beiden Halbschalen des Rotorblattes herzustellen. Zusätzlich dazu werden weitere Elemente in den beiden Hartschalen implementiert, welche es ermöglichen, das Rotorblatt entlang der Teilungsebene zu trennen, getrennt zum Aufstellort zu transportieren und dann das Rotorblatt am Aufstellort wieder zusammen zu setzen.

Gemäß einem Aspekt der vorliegenden Erfindung kann das Rotorblatt mehrteilig ausgelegt werden, indem ein Rotorblatt einteilig hergestellt wird und dann entlang einer Teilungsebene getrennt wird, so dass ein Rotorblattinnenabschnitt und ein Rotorblattaußenabschnitt entstehen.

Sowohl in dem Rotorblattinnenabschnitt als auch in dem Rotorblattaußenabschnitt kann jeweils ein Hauptgurt vorgesehen sein. Gemäß einem Aspekt der vorliegenden Erfindung ist damit kein durchgehender Hauptgurt vorgesehen. Optional können die beiden (Teil-)Hauptgurte in dem Rotorblattinnenabschnitt und dem Rotorblattaußenabschnitt miteinander verbunden werden.

Weitere Ausführungsbeispiele sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines Windenergieanlagen-Rotorblattes gemäß einem ersten Ausführungsbeispiel,
- Fig. 3: zeigt eine schematische Darstellung eines Windenergieanlagen-Rotorblattes gemäß einem zweiten Ausführungsbeispiel,
- Fig. 4: zeigt eine schematische Darstellung eines Windenergieanlagen-Rotorblattes gemäß einem dritten Ausführungsbeispiel,
- Fig. 5: zeigt eine schematische Darstellung eines Windenergieanlagen-Rotorblattes gemäß einem vierten Ausführungsbeispiel,
- Fig. 6: zeigt eine schematische Darstellung eines Windenergieanlagen-Rotorblattes gemäß einem fünften Ausführungsbeispiel,
- Fig. 7: zeigt eine schematische Schnittansicht eines Windenergieanlagen-Rotorblattes gemäß einem sechsten Ausführungsbeispiel, und
- Fig. 8: zeigt eine perspektivische Ansicht von Hinterkantenstegen gemäß dem siebten Ausführungsbeispiel.

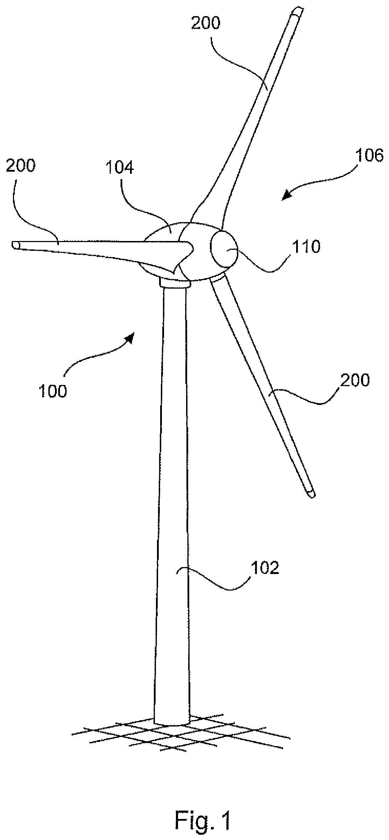

Fig. 1 zeigt eine schematische Darstellung einer Windenergieanlage gemäß der Erfindung. Die Windenergieanlage 100 weist einen Turm 102 sowie eine Gondel 104 und einen aerodynamischen Rotor 106 auf. Der aerodynamische Rotor 106 weist einen Spinner 110 sowie beispielsweise drei Rotorblätter 200 auf. Der aerodynamische Rotor 106 ist direkt oder indirekt mit einem elektrischen Generator gekoppelt und treibt einen elektrischen Rotor des Generators an, um elektrische Energie zu erzeugen.

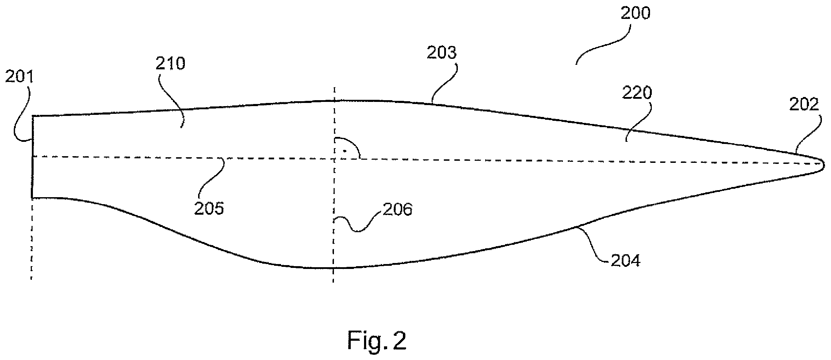

Fig. 2 zeigt eine schematische Darstellung eines Windenergieanlagen-Rotorblattes gemäß einem ersten Ausführungsbeispiel. Das Rotorblatt 200 weist eine Rotorblattwurzel 201, eine Rotorblattspitze 202, eine Rotorblattvorderkante 203 und eine Rotorblatthinterkante 204 auf. Ferner weist das Rotorblatt 200 eine Rotorblattlängsachse 205 sowie eine Teilungsebene 206 auf, welche beispielsweise rechtwinklig zur Rotorblattlängsachse 205 und parallel zur Rotorblattwurzel 201a ausgestaltet ist. Wenn das Rotorblatt entlang der Teilungsebene 206 geteilt ist, dann weist das Rotorblatt einen Rotorblattinnenabschnitt 210 und einen Rotorblattaußenabschnitt 220 auf.

Ferner kann das Rotorblatt zwei Halbschalen aufweisen, welche zusammengeklebt werden können. Gemäß dem ersten Ausführungsbeispiel werden zunächst die beiden Halbschalen hergestellt und anschließend zusammengeklebt. Falls ein einteiliges Rotorblatt benötigt wird, dann wird das Rotorblatt nicht entlang der Teilungsebene 206 geteilt. Falls jedoch ein mehrteiliges Rotorblatt benötigt wird, dann wird das Rotorblatt entlang der Teilungsebene 206 geteilt. Dies kann beispielsweise dadurch erfolgen, dass das Rotorblatt an dieser Stelle durchgesägt wird. Dies erfolgt insbesondere erst dann, wenn die beiden Halbschalen hergestellt und zusammengeklebt worden sind. Das Rotorblatt gemäß dem ersten Ausführungsbeispiel kann somit einteilig oder mehrteilig ausgestaltet sein, ohne dass hierzu die für die Herstellung der Halbschalen benötigten Formen angepasst werden müssten. Das Rotorblatt gemäß dem ersten Ausführungsbeispiel ist damit dazu geeignet, als einteiliges oder als mehrteiliges Rotorblatt verwendet werden zu können.

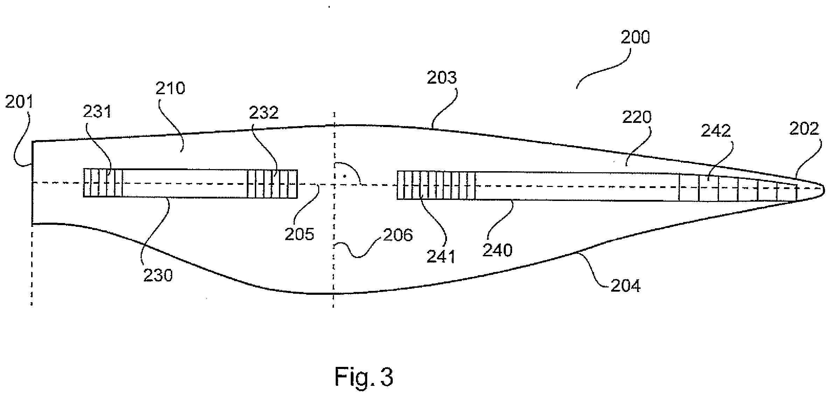

Fig. 3 zeigt eine schematische Darstellung eines Windenergieanlagen-Rotorblattes gemäß einem zweiten Ausführungsbeispiel. Zusätzlich zu den in Fig. 2 gezeigten Teilen des Rotorblattes weist das Rotorblatt gemäß Fig. 3 einen ersten Hauptgurt 230 in dem Rotorblattinnenabschnitt 210 und einen zweiten Hauptgurt 240 in dem Rotorblattaußenabschnitt 220 auf. Die beiden Hauptgurte 230, 240 dienen dazu, die auf das Rotorblatt wirkenden Kräfte aufzunehmen und abzuleiten. Der erste und zweite Hauptgurt 230, 240 kann an den jeweiligen Enden 231, 232; 241, 242 geschäftet ausgestaltet sein.

Vorzugsweise ist die Teilungsebene 206 im Bereich des inneren Drittels vorgesehen, d. h. die Teilungsebene 206 befindet sich innerhalb der ersten 33% der Länge des Rotorblattes, um die Verbindungselemente möglichst von innen zu spannen und warten zu können.

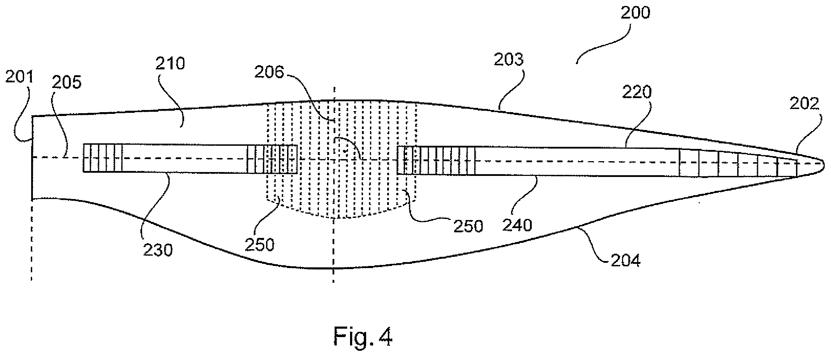

Fig. 4 zeigt eine schematische Darstellung eines Windenergieanlagen-Rotorblattes gemäß einem dritten Ausführungsbeispiel. Zusätzlich zu den in Fig. 3 gezeigten Elementen weist das Rotorblatt einen Verstärkungsbereich 250 sowohl in bzw. an dem Rotorblattinnenabschnitt 210 als auch an dem Rotorblattaußenabschnitt 220 auf. Der Verstärkungsbereich 250 kann optional geschäftet ausgestaltet sein und soll eine Verbindung des Rotorblattinnenabschnitts 210 mit dem Rotorblattaußenabschnitt 220 ermöglichen, wenn das Rotorblatt entlang der Teilungsebene 206 aufgetrennt worden ist, um ein mehrteiliges Rotorblatt zu erhalten. Gemäß der Erfindung wird eine Massenmomenterhöhung infolge zusätzlichem Eigengewicht begrenzt.

Insbesondere durch das Vorsehen des Verstärkungsbereiches 250 an dem Rotorblattinnenabschnitt 210 und dem Rotorblattaußenabschnitt und insbesondere im Bereich der Teilungsebene 206 kann das erfindungsgemäße Rotorblatt sowohl einteilig als auch mehrteilig verwendet werden. Für eine mehrteilige Verwendung muss das Rotorblatt lediglich entlang der Teilungsebene 206 (welche vorzugsweise senkrecht zur Rotorblattlängsachse 205 ausgestaltet ist) getrennt bzw. durchgesägt werden. Eine weitere Anpassung des Rotorblattes für die mehrteilige Form wird nicht benötigt.

Damit können die gleichen Formen für die Herstellung der Halbschalen verwendet werden, unabhängig davon, ob das Rotorblatt einteilig oder mehrteilig ausgestaltet sein soll.

Durch das Vorsehen des Verstärkungsbereiches 250 wird zwar das Gewicht des Rotorblattes erhöht (beispielsweise um ca. 10%), dafür sind die für die Herstellung der Halbschalen benötigten Formen jedoch gleich, unabhängig davon, ob ein einteiliges oder mehrteiliges Rotorblatt benötigt wird.

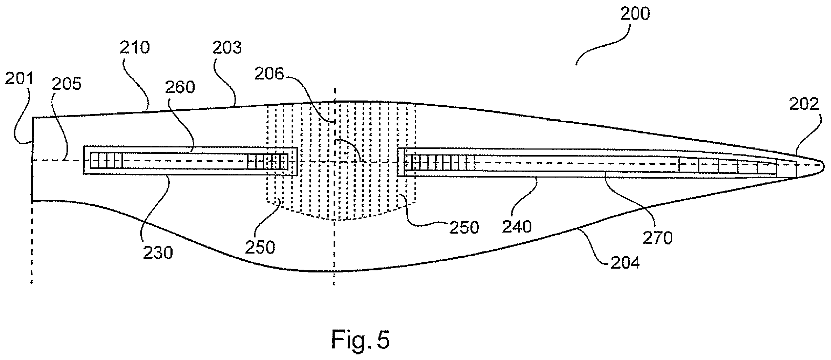

Fig. 5 zeigt eine schematische Darstellung eines Windenergieanlagen-Rotorblattes gemäß einem vierten Ausführungsbeispiel. Zusätzlich zu den in Fig. 4 gezeigten Elementen weist das Rotorblatt 200 gemäß dem vierten Ausführungsbeispiel Hauptstege 260, 270 im Bereich der Gurte 230, 240 auf. Die Hauptstege 260, 270 enden vorzugsweise im Bereich der Verstärkungsbereiche 250 vor der Teilungsebene 206. Damit sind die Hauptstege 260, 270 nicht durchgängig ausgestaltet. Damit sind insbesondere um den Bereich der Teilungsebene 206 herum weder Hauptstege noch Hauptgurte vorgesehen.

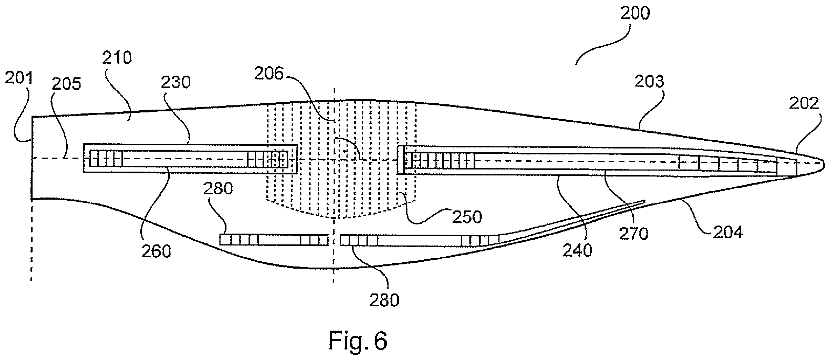

Fig. 6 zeigt eine schematische Darstellung eines Windenergieanlagen-Rotorblattes gemäß einem fünften Ausführungsbeispiel. Zusätzlich zu den Elementen des Rotorblattes gemäß dem vierten Ausführungsbeispiel weist das Rotorblatt 200 gemäß dem fünften Ausführungsbeispiel eine Hinterkantenverstärkung 280 (z. B. in Form von Gurten) und einen Hinterkantensteg 290 (in Fig. 6 nicht gezeigt) sowohl in dem Rotorblattinnenabschnitt 210 als auch in dem Rotorblattaußenabschnitt 220 auf. Damit sind die Hinterkantenverstärkung bzw. die Hinterkantenstege nicht durchgängig ausgestaltet, sondern sind im Bereich der Teilungsebene 206 geteilt vorgesehen. Optional kann eine Verbindung zwischen den Hinterkantenstegen an dem Rotorblattinnenabschnitt 210 und dem Rotorblattaußenabschnitt 220 vorgesehen sein.

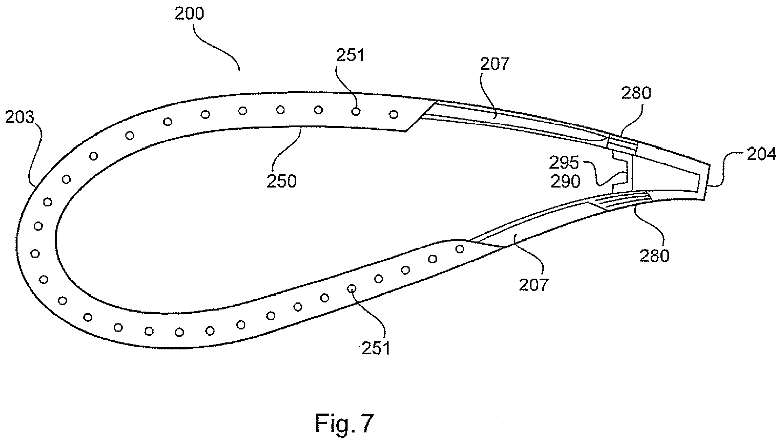

Fig. 7 zeigt eine schematische Schnittansicht eines Windenergieanlagen-Rotorblattes gemäß einem sechsten Ausführungsbeispiel. Das Rotorblatt 200 gemäß dem sechsten Ausführungsbeispiel weist eine Vorderkante 203 und eine Hinterkante 204 auf. Des Weiteren weist das Rotorblatt 200 eine Rotorblattwandung 207 auf, welche beispielsweise in einer Sandwich-Bauweise hergestellt sein kann. In der Rotorblattwandung 207 können die Hinterkantenverstärkungen 280 vorgesehen sein. Ferner ist ein Verstärkungsbereich 250 mit einer Mehrzahl von Löchern oder Durchgangsbohrungen 251 vorgesehen, mittels welchen eine Verbindung mit dem anderen Rotorblattteil ermöglicht werden kann. Ferner sind ein Hinterkantensteg 290 und ein Zusatzsteg 295 (in der Perspektive von Fig. 7 sind der Steg 290 und der Steg 295 überlagert gezeigt) vorgesehen, der als Verbindungselement dient, um Kräfte überleiten zu können.

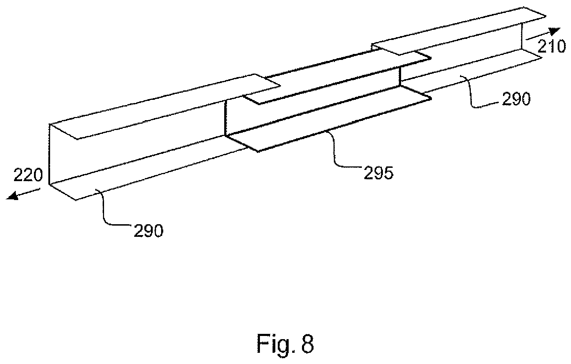

Fig. 8 zeigt eine perspektivische Ansicht von Hinterkantenstegen gemäß dem siebten Ausführungsbeispiel. In Fig. 8 sind insbesondere die zwei Hinterkantenstege 290 vorgesehen, welche jeweils an dem Rotorblattinnenabschnitt 210 und dem Rotorblattaußenabschnitt 220 vorgesehen sind. Zwischen den beiden Hinterkantenstegen 290 ist ein Zusatzsteg 295 vorgesehen, welcher dazu dient, eine Verbindung zwischen den beiden Hinterkantenstegen 290 an dem Rotorblattinnenabschnitt und dem Rotorblattaußenabschnitt vorzusehen. Vorzugsweise ist eine Überlappung zwischen den Hinterkantenstegen 290 und dem Zusatzsteg 295 vorgesehen. Diese Überlappung kann beispielsweise zwischen 100 bis 300 mm betragen.

Der Zusatzsteg 295 dient dann als Verbindungselement, um Kräfte zwischen den Hinterkantenstegen 290 ableiten zu können.

Die Hinterkantenstege 290 können im Bereich der Hinterkantenverstärkung 280 vorgesehen sein. Wie beispielsweise in Fig. 7 gezeigt, können die Stege 290 als Verbindung zwischen den Hinterkantenverstärkungen 280 an der Saugseite und der Druckseite vorgesehen sein.

## Patentansprüche

1. Verfahren zum Montieren eines Windenergieanlagen-Rotorblattes, an einer Gondel einer Windenergieanlage,
wobei das Windenergieanlagen-Rotorblatt (200) einen Rotorblattwurzelbereich (201), einen Rotorblattspitzenbereich (202), eine Rotorblattvorderkante (203), eine Rotorblatthinterkante (204), eine Rotorblattlängsachse (205), einen Rotorblattinnenabschnitt (210), einen Rotorblattaußenabschnitt (220) sowie mindestens eine Teilungsebene (206) zwischen dem Rotorblattaußenabschnitt (220) und dem Rotorblattinnenabschnitt (210) aufweist, wobei das Rotorblatt (200) entlang der mindestens einen Teilungsebene (206) teilbar ist, und jeweils einem Verstärkungsbereich (250) in dem Rotorblattinnenabschnitt (210) und dem Rotorblattaußenabschnitt (220) aufweist, welche jeweils benachbart zu der Teilungsebene (206) angeordnet sind,
wobei die mindestens eine Teilungsebene (206) und der Verstärkungsbereich (250) derart ausgestaltet sind, dass das Rotorblatt (200) durch Trennung entlang der Teilungsebene (206) mehrteilig ausgestaltet sein kann,
wobei der Verstärkungsbereich (250) an dem Rotorblattinnenabschnitt (210) nach der Trennung des Rotorblattes (200) entlang der Teilungsebene (206) an dem Verstärkungsbereich (250) des Rotorblattaußenabschnitts (220) befestigbar ist, mit den Schritten:
Überprüfen der Logistikeinschränkungen zu einem Aufstellort der Windenergieanlage,
Auswählen eines einteiligen oder mehrteiligen Rotorblattes (200) basierend auf den Logistikeinschränkungen,
Herstellen eines Windenergieanlagen-Rotorblattes (200) in einer einteiligen Fassung in einer Hauptform,
Trennen des einteilig hergestellten Windenergieanlagen-Rotorblattes entlang mindestens einer Teilungsebene (206) basierend auf den Logistikeinschränkungen, um mindestens einen Rotorblattinnenabschnitt (210) und mindestens einen Rotorblattaußenabschnitt (220) zu erhalten,
Transportieren des Rotorblattinnenabschnittes (210) und des Rotorblattaußenabschnittes (220) getrennt voneinander zum Aufstellort,
Zusammenfügen des Rotorblattinnenabschnittes (210) und des Rotorblattaußenabschnittes (220) an dem Aufstellort und
Montieren des zusammengebauten Rotorblattes an der Gondel der Windenergieanlage oder
Transportieren des ungeteilten Rotorblattes (200) zum Aufstellort und Montieren des ungeteilten Rotorblattes (200) an der Gondel der Windenergieanlage.

2. Verfahren nach Anspruch 1, wobei
das Windenergieanlagen-Rotorblatt einen ersten Hauptgurt (230) in dem Rotorblattinnenabschnitt (210) und einen zweiten Hauptgurt (240) in dem Rotorblattaußenabschnitt (220) aufweist.

3. Verfahren nach Anspruch 2, wobei
der erste und zweite Hauptgurt (230, 240) an ihren Enden (231, 232; 241, 242) geschäftet ausgestaltet sind.

4. Verfahren nach einem der Ansprüche 1 bis 3, wobei
das Windenergieanlagen-Rotorblatt einen ersten Steg (260) im Bereich des ersten Hauptgurtes (230) und einen zweiten Steg (270) im Bereich des zweiten Hauptgurtes (240) aufweist,
wobei der erste und zweite Steg (260, 270) vor der Teilungsebene (206) enden.

5. Verfahren nach einem der Ansprüche 1 bis 4, wobei
das Windenergieanlagen-Rotorblatt eine Hinterkantenverstärkung (280) und einen Hinterkantensteg (290) sowohl in dem Rotorblattinnenabschnitt (210) als auch in dem Rotorblattaußenabschnitt (220) aufweist.

6. Verfahren nach einem der Ansprüche 1 bis 5, wobei
die Verstärkungsbereiche (250) eine Mehrzahl von Durchgangslöchern oder Durchgangsbohrungen (251) aufweisen.

## Claims

1. A method for mounting a wind power plant rotor blade to a nacelle of a wind power plant, wherein the wind power plant rotor blade (200) comprises a rotor blade root area (201), a rotor blade tip area (202), a rotor blade leading edge (203), a rotor blade trailing edge (204), a rotor blade longitudinal axis (205), a rotor blade inner section (210), a rotor blade outer section (220), as well as at least one dividing plane (206) between the rotor blade outer section (220) and the rotor blade inner section (210), wherein the rotor blade (206) can be split along the dividing plane (206), and a respective reinforcement area (250) in the rotor blade inner section (210) and the rotor blade outer section (220), which each are arranged next to the dividing plane (206),
wherein the at least one dividing plane (206) and the reinforcing area (250) are configured such that the rotor blade (200) is of a multi-part design by splitting along the dividing plane,
wherein, after splitting the rotor blade (200) along the dividing plane (206), the reinforcement area (250) on the rotor blade inner section (210) can be fastened to the reinforcement area (250) of the rotor blade outer section (220) with the following steps:
checking the logistical restrictions on an installation site of the wind power plant,
selecting a one-part or multi-part rotor blade (200) based on the logistical restrictions,
manufacturing a wind power plant rotor blade (200) in a one-part version in a main die,
splitting the wind power plant rotor blade manufactured in one part along at least one dividing plane (206) based on the logistical restrictions, so as to obtain at least one rotor blade inner section (210) and at least one rotor blade outer section (220),
transporting the rotor blade inner section (210) and the rotor blade outer section (220) to the installation site separately from each other,
joining the rotor blade inner section (210) and the rotor blade outer section (220) together at the installation site, and
mounting the assembled rotor blade on the nacelle of the wind power plant or
transporting the undivided rotor blade (200) to the installation site and mounting the undivided rotor blade (200) to the nacelle of the wind power plant.

2. Method according to claim 1, wherein the wind power plant rotor blade (200) comprises a first main belt (230) in the rotor blade inner section (210) and a second main belt (240) in the rotor blade outer section (220).

3. Method according to claim 2, wherein
the ends (231, 232; 241, 242) of the first and second main belts (230, 240) are scarfed in design.

4. Method according to one of claims 1 to 3, wherein the wind power plant rotor blade (200) comprises
a first web (260) in the area of the first main belt (230) and a second web (270) in the area of the second main belt (240),
wherein the first and second webs (260, 270) end before the dividing plane (206).

5. Method according to one of claims 1 to 4, wherein the wind power plant rotor blade (200) comprises
a trailing edge reinforcement (280) and a trailing edge web (290) both in the rotor blade inner section (210) and in the rotor blade outer section (220).

6. Method according to one of claims 1 to 5, wherein
the reinforcement areas (250) have a plurality of through holes or through bores (251).

## Revendications

1. Procédé de montage d'une pale de rotor d'éolienne sur une nacelle d'une éolienne,
dans lequel la pale de rotor (200) d'éolienne présente une zone de racine (201) de pale de rotor, une zone de pointe (202) de pale de rotor, un bord d'attaque (203) de pale de rotor, un bord de fuite (204) de pale de rotor, un axe longitudinal (205) de pale de rotor, une section intérieure (210) de pale de rotor, une section extérieure (220) de pale de rotor ainsi qu'au moins un plan de division (206) entre la section extérieure (220) de pale de rotor et la section intérieure (210) de pale de rotor, dans lequel la pale de rotor (200) peut être divisée le long de l'au moins un plan de division (206) et présente respectivement une zone de renforcement (250) dans la section intérieure (210) de pale de rotor et la section extérieure (220) de pale de rotor, qui sont respectivement disposées de manière adjacente au plan de division (206),
dans lequel l'au moins un plan de division (206) et la zone de renforcement (250) sont configurés de telle manière que la pale de rotor (200) peut être configurée en plusieurs parties par division le long du plan de division (206),
dans lequel la zone de renforcement (250) peut être fixée sur la section intérieure (210) de pale de rotor après la division de la pale de rotor (200) le long du plan de division (206) sur la zone de renforcement (250) de la section extérieure (220) de pale de rotor, avec les étapes :
de vérification des restrictions logistiques sur un site d'installation de l'éolienne,
de sélection d'une pale de rotor (200) en une partie ou en plusieurs parties sur la base des contraintes logistiques,
de fabrication d'une pale de rotor (200) de l'éolienne dans une monture en une partie dans un moule principal,
de séparation de la pale de rotor d'éolienne fabriquée en une partie le long d'au moins un plan de division (206) sur la base des contraintes logistiques pour obtenir au moins une section intérieure (210) de pale de rotor et au moins une section extérieure (220) de pale de rotor,
de transport de la section intérieure (210) de pale de rotor et de la section extérieure (220) de pale de rotor séparées l'une de l'autre jusqu'au site d'installation,
d'assemblage de la section intérieure (210) de pale de rotor et de la section extérieure (220) de pale de rotor sur le site d'installation et
de montage de la pale de rotor assemblée sur la nacelle de l'éolienne ou
de transport de la pale de rotor (200) non divisée jusqu'au site d'installation et de montage de la pale de rotor (200) non divisée sur la nacelle de l'éolienne.

2. Procédé selon la revendication 1, dans lequel
la pale de rotor d'éolienne présente une première membrure principale (230) dans la section intérieure (210) de pale de rotor et une seconde membrure principale (240) dans la section extérieure (220) de pale de rotor.

3. Procédé selon la revendication 2, dans lequel
la première et la seconde membrure principale (230, 240) sont configurées en biseau sur leurs extrémités (231, 232 ; 241, 242).

4. Procédé selon l'une quelconque des revendications 1 à 3, dans lequel
la pale de rotor d'éolienne présente une première âme (260) dans la zone de la première membrure principale (230) et une seconde âme (270) dans la zone de la seconde membrure principale (240),
dans lequel la première et la seconde âme (260, 270) se terminent devant le plan de division (206).

5. Procédé selon l'une quelconque des revendications 1 à 4, dans lequel
la pale d'éolienne présente un renfort (280) de bord de fuite et une âme (290) de bord de fuite à la fois dans la section intérieure (210) de pale de rotor et la section extérieure (220) de pale de rotor.

6. Procédé selon l'une quelconque des revendications 1 à 5, dans lequel
les zones de renforcement (250) présentent une multitude de trous de passage ou d'alésages de passage (251).
